# EUROPÄISCHE PATENTANMELDUNG

(11) **EP 2 008 522 A1**
(43) Veröffentlichungstag der Anmeldung: **31.12.2008**
(21) Anmeldenummer: 07012724.6
(22) Anmeldetag: 28.06.2007
(51) Int. Cl.: A22C 15/00, B65G 47/61

(54) **Verfahren und Vorrichtung zum Aufnehmen von Portionen mit Schlaufe**

(71) Anmelder: Albert Handtmann Maschinenfabrik GmbH & Co. KG, 88400 Biberach (DE)
(72) Erfinder: Reutter, Siegfried, 88436 Eberhardzell (DE); Pfender, Wolfgang, 88250 Weingarten (DE); Bächtle, Manfred, 88433 Schemmerhofen (DE); Müller, Gerhard, 88433 Schemmerhofen (DE); Schliesser, Gerhard, 88489 Wain (DE); Flach, Jürgen, 89611 Obermarchtal (DE)
(74) Vertreter: Grünecker, Kinkeldey, Stockmair & Schwanhäusser Anwaltssozietät

(57) **Zusammenfassung**

Die Erfindung betrifft ein Verfahren und eine Vorrichtung zum Aufnehmen von Portionen (1) mit Schlaufe (2), wobei die Vorrichtung eine Verschlusseinheit (3) zum Verschließen von Würsten und zum Anbringen von Schlaufen an die Wurstportionen umfasst. Um ausreichend definierte Produktabstände beim Ablegen der Portionen auf ein Entnahmemittel (11), z. B. auf einen Rauchstock, zu gewährleisten und die auf die Wurstportionen wirkenden Kräfte zu minimieren, umfasst die Vorrichtung weiter eine Aufnahmeeinheit (4), die nach der Verschlusseinheit angeordnet ist und die so ausgebildet ist, dass die Wurstportionen im Wesentlichen quer zu einer Transportrichtung (T) liegend aufgenommen werden und in Transportrichtung transportiert werden, derart, dass die Schlaufen über ein Entnahmemittel bringbar sind, während die Portionen auf der Aufnahmeeinheit aufliegen.

## Beschreibung

Die vorliegende Erfindung betrifft eine Vorrichtung zum Aufnehmen von an Schlaufen aufgehängten Wurstportionen sowie ein entsprechendes Verfahren gemäß den Oberbegriffen der Ansprüche 1 und 18.

An geclipten Portionen werden teilweise Schlaufen mit eingeclipt. Unter Wurstportionen versteht man entweder Einzelwürste oder eine Wurstkette mit einer bestimmten Anzahl von aneinanderhängenden Einzelwürsten. Unter Wurstportionen versteht man nicht nur mit Brät gefüllte Würste, sondern auch mit anderen pastösen Massen gefüllte Würste. Die Schlaufen werden zum Aufhängen der Portionen auf Entnahmemittel, insbesondere Rauchstöcke gehängt. Die Rauchstöcke wiederum werden z. B. in Rauchwagen gehängt und anschließend in hängendem Zustand z. B. in einer Rauchkammer weiterbehandelt. Teilweise werden die Produkte auch zum Verkauf an der Schlaufe aufgehängt. Beim Produktionsablauf werden die Hüllen in bekannter Weise gefüllt und anschließend mit einer Verschlusseinheit (z. B. Clipmaschine) verschlossen. Beim Setzen der Verschlussklammem wird eine Schlaufe miteingeclipt. Die Portionen werden z. B. auf einen Tisch produziert. Auf dem Tisch werden diese dann vom Bedienpersonal aufgereiht und jede Schlaufe auf den Rauchstock aufgefädelt. Die Rauchstöcke werden dann z. B. in einen Rauchwagen gehängt. Dabei muss darauf geachtet werden, dass die Portionen sich nicht berühren, da sonst z. B. der Rauch nicht überall an die Wurstportionen hinkommt, was optisch durch Flecken sichtbar ist. Die Tätigkeit ist sehr personalintensiv und begrenzt die mögliche Leistung einer Produktionslinie.

Aus der WO 92/03929 ist bereits eine Vorrichtung bekannt, bei der an einer Schlaufe hängende Wurstportionen an einen Haken übergeben werden und auf einen Rauchstock aufgezogen werden. Die Schlaufen werden von den Haken auf den Rauchstock abgeworfen. Die Genauigkeit der Hängeposition auf dem Rauchstock hängt aber von der Masseträgheit der Portion, der Reibung der Schlaufe auf dem Rauchstock sowie der linearen Geschwindigkeit der Haken bzw. Greifelemente ab. Ist der Rauchstock voll bestückt, wird der Rauchstock entnommen und der nächste leere Rauchstock wird in die Beladeposition gebracht und bestückt.

Das bekannte Verfahren bzw. die bekannte Vorrichtung ermöglichen jedoch keine ausreichend definierten Produktabstände beim Ablegen auf den Rauchstock. Es ergibt sich darüber hinaus eine sehr eingeschränkte Flexibilität bzgl. der verwendeten Rauchstöcke. Die Schlaufe muss dynamische Kräfte beim Fall nach unten in die Senkrechte aufnehmen.

Hiervon ausgehend liegt der vorliegenden Erfindung die Aufgabe zugrunde, eine Vorrichtung und ein Verfahren zum Aufnehmen von Portionen mit Schlaufe bereitzustellen, die ausreichend definierte Produktabstände beim Ablegen auf das Entnahmemittel gewährleisten und die auf die Wurstportionen wirkenden Kräfte minimieren.

Erfindungsgemäß wird diese Aufgabe durch die kennzeichnenden Merkmale der Ansprüche 1 und 18 gelöst.

Dadurch, dass die Portionen auf der Aufnahmeeinheit aufliegen, wenn die Schlaufen über ein Entnahmemittel gebracht werden, entfällt ein Herabwerfen bzw. Herabfallen der Wurstportionen, so dass keine dynamischen Kräfte durch einen Fall aufgenommen werden müssen. Dies ist außerordentlich produktschonend. Durch den Transport der gleichmäßig beabstandeten Wurstportionen in der Aufnahmeeinrichtung, wobei die Wurstportionen quer zur Transportrichtung liegen, kann ein sicheres Einhalten der Portionsabstände gewährleistet werden. Das Entnahmemittel ist flexibel positionierbar. Der Ausdruck, dass die Schlaufen über das Entnahmemittel gebracht werden, schließt sowohl ein, dass das Entnahmemittel durch lineare Bewegung in die Schlaufen eingeführt wird, als auch dass die Schlaufen durch die Aufnahmeeinheit über das Entnahmemittel gezogen werden.

Gemäß einer bevorzugten Ausführungsform der vorliegenden Erfindung umfasst die Vorrichtung ein Führungselement, das die Schlaufen aufnimmt, so dass die Schlaufen an dem Führungselement von der Verschlusseinheit zu der Aufnahmeeinheit geführt werden. Dadurch, dass nicht nur die Wurstportion über entsprechende Transportmittel gefördert wird, sondern gleichzeitig die Schlaufe durch das Führungselement geführt wird, kann die Schlaufe exakt zum Entnahmemittel ausgerichtet werden, so dass das Entnahmemittel leicht eingefädelt werden kann. Die Schlaufe kann also bis zur Übergabe auf das Entnahmemittel geführt werden. Gemäß der vorliegenden Erfindung erstreckt sich das Führungselement zumindest in dem von der Verschlusseinheit abgewandten Endbereich im wesentlichen in Transportrichtung der Aufnahmeeinheit, so dass die Schlaufe leicht über das Entnahmemittel gebracht werden kann.

Es ist vorteilhaft, wenn das Führungselement am Ende einen vergrößerten Querschnitt aufweist, so dass die Schlaufen gespreizt werden und das Entnahmemittel durchgesteckt werden kann.

Vorzugsweise umfasst die Aufnahmeeinheit ein umlaufendes Transportmittel, beispielsweise ein umlaufendes Transportband, Kette, etc. Das umlaufende Transportmittel kann umlaufende Schalen zur Aufnahme der einzelnen Wurstportionen aufweisen. Diese Schalen können dann z. B. an das entsprechende Produktkaliber und an die entsprechende Produktform angepasst sein, um somit die Wurstportionen lagefixiert mit definiertem Abstand aufzunehmen. Die Schalen können vorgefertigte Schalenelemente sein, die z.B. auf das umlaufende Transportmittel aufgebracht werden oder aber durch auf das Transportmittel bzw. das Antriebselement in bestimmtem Abstand zueinander aufgesteckte Stege realisiert werden.

Vorzugsweise erstreckt sich das Entnahmemittel in linearer Verlängerung zum Führungselement. D. h. das Ende des Führungselementes ist gleichzeitig die Schnittstelle zum Entnahmemittel. Somit ist die Entnahme der Schlaufen besonders einfach.

Gemäß einer bevorzugten Ausführungsform ist die Anzahl der Aufnahmeplätze für die Wurstportionen auf der Oberseite der Aufnahmeeinheit größer als die auf das Entnahmemittel aufzunehmende Anzahl an Wurstportionen. Dadurch, dass in einer horizontalen Ebene mehr Aufnahmeplätze zur Verfügung stehen als Wurstportionen auf das Entnahmemittel aufgehängt werden, ist ein kontinuierlicher Betrieb der Vorrichtung möglich, da die Länge der Einheit so gewählt ist, dass die Portionen gepuffert werden können. Das bedeutet, dass wenn ein beladenes Entnahmemittel gegen ein neues ausgetauscht wird, Wurstportionen kontinuierlich weiter in den Anfangsbereich der Aufnahmeeinheit gefördert werden können, um schließlich auf das neue Entnahmemittel gebracht zu werden. Dazu muss die Vorrichtung nicht gestoppt werden, was die Produktionsleistung erhöht.

Gemäß einem bevorzugten Ausführungsbeispiel umfasst die Vorrichtung ein Übergabetransportmittel, das die Wurstportionen in einer Richtung quer zur Transportrichtung der Aufnahmeeinheit von der Verschlusseinheit zu einer Übergabeeinrichtung fördert, die die Portionen quer in die Aufnahmeeinheit übergibt. Dabei kann die Übergabeeinrichtung z. B. ein Schieber sein, der die Wurstportion auf die Aufnahmeeinheit schiebt. Auf diese Art und Weise können die Wurstportionen einfach in die Aufnahmeplätze der Aufnahmeeinheit gebracht werden.

Ferner kann die erfindungsgemäße Vorrichtung eine Halteeinrichtung umfassen, die mindestens ein Entnahmemittel an einem Ende parallel zur Aufnahmeeinheit hält. Eine solche Halteeinrichtung ermöglicht ein automatisches Aufbringen der Schlaufen auf das Entnahmemittel, ohne dass das Entnahmemittel durch eine Person gehalten werden muss.

Die Halteeinrichtung kann auch mehrere Entnahmemittel halten, wobei die Halteeinrichtung drehbar gelagert ist. Eine solche drehbar gelagerte Halteeinrichtung bringt den Vorteil mit sich, dass eine kontinuierliche Produktion möglich ist, da, wenn ein Entnahmemittel voll beladen ist, dieses aus der Aufnahmeposition gedreht werden kann, wobei sich gleichzeitig ein nachfolgendes Entnahmemittel in die Aufnahmeposition dreht, um so mit weiteren Portionen beladen zu werden.

Gemäß einem weiteren bevorzugten Ausführungsbeispiel der vorliegenden Erfindung kann die Aufnahmeeinheit auch derart ausgebildet sein, dass sie Portionen in zwei übereinander angeordneten Ebenen aufnimmt. Dabei fördert die Aufnahmeeinheit die Portionen, die auf ein erstes Entnahmemittel aufgebracht werden sollen, in einer ersten horizontalen Ebene und die Portionen, die auf ein nachfolgendes zweites Entnahmemittel aufgebracht werden, in einer zweiten horizontalen Ebene. Dies hat den Vorteil, dass der Beladeprozess kontinuierlich erfolgen kann, wobei, wenn ein Entnahmemittel voll beladen ist und entnommen wird, die Wurstportionen zwischenzeitlich bereits auf einen, in einer zweiten horizontalen Ebene angeordneten, Rauchstock bzw. Entnahmemittel aufgebracht werden können.

Dies kann beispielsweise so realisiert werden, indem die Aufnahmeeinheit an ihrem vorderen Ende eine Zuführeinheit umfasst, beispielsweise eine umlaufende Transporteinrichtung und zwei sich daran anschließende übereinander liegende umlaufende Transportmittel, z. B. ebenfalls umlaufende Transportbänder, wobei die Zuführeinheit schwenkbar angeordnet ist, so dass Portionen von der Zuführeinheit entweder dem oberen oder dem unteren Transportmittel zugeführt werden können.

Dabei ist dann die Halteeinrichtung so ausgebildet, dass sie zwei übereinander angeordnete Halterungen für zwei übereinander anzuordnende Entnahmemittel aufweist, so dass die Entnahmemittel entweder dem oberen Transportmittel oder dem unteren Transportmittel zugeordnet werden. Das bedeutet also, wenn die Wurstportionen auf dem oberen Transportmittel transportiert werden, dass die Schlaufen dieser Wurstportionen dann über das obere Entnahmemittel gebracht werden, während die Schlaufen der auf dem unteren Transportmittel transportierten Portionen auf ein unteres Entnahmemittel gebracht werden. Somit ist ein kontinuierlicher Betrieb möglich. Um auch die Schlaufen in eine entsprechende obere oder untere Position zu bringen, ist zumindest ein Endbereich des Führungselementes als Verteilerstück ausgebildet, das zwischen einer ersten und zweiten Ebene verschwenkbar ist.

Gemäß einer weiteren Ausführungsform der vorliegenden Erfindung umfasst die Vorrichtung eine linear bewegliche Halteeinrichtung für das Entnahmemittel, so dass das Entnahmemittel in die Schlaufen bewegbar ist, oder aber das Entnahmemittel an die Schnittstelle zu dem Führungselement gefahren und exakt positioniert werden kann.

Gemäß einem weiteren Ausführungsbeispiel weist das Führungselement ein Führungsrohr auf, in dem eine Führungsstange horizontal beweglich angeordnet ist, wobei das von dem Führungsrohr abgewandte Ende eine Aufnahme für das Entnahmemittel aufweist. Das Führungsrohr und die Führungsstange bilden in Kombination eine Teleskopstange. So kann der Bediener das Entnahmemittel am Ende der Führungsstange positionieren und beispielsweise gegen eine Feder die Führungsstange in das Führungselement bis zu einem Anschlag drücken. Dabei können die Schlaufen übergeben werden. Dies ermöglicht eine sichere Positionierung des Entnahmemittels und ein sicheres kontinuierliches Aufbringen der Schlaufen auf das Entnahmemittel.

Das Entnahmemittel kann manuell oder maschinell in die Schlaufen durch eine entgegengesetzt zur Transportrichtung der Aufnahmeeinheit gerichtete lineare Bewegung eingeführt werden. Die Schlaufen können auch beim Transport in der Aufnahmeeinrichtung über das Entnahmemittel gezogen werden.

Die Portionen werden gemäß der vorliegenden Erfindung lagefixiert mit definiertem Abstand zueinander in der Aufnahmeeinheit aufgenommen und transportiert.

Die vorliegende Erfindung wird nachfolgend unter Bezugnahme der folgenden Figuren näher erläutert.
Figur 1 zeigt eine Aufsicht auf ein erstes Ausführungsbeispiel gemäß der vorliegenden Erfindung.
Figur 2a zeigt eine Ansicht aus der X-Richtung , der in Figur 1 gezeigten Vorrichtung.
Figur 2b zeigt eine Ansicht aus der X- Richtung gemäß einer weiteren Ausführungsform der Aufnahmeschalen, der in Figur 1 gezeigten Vorrichtung.
Figuren 3a, 3b, 3c zeigen eine Ansicht aus der Y-Richtung, der in Figur 1 gezeigten Vorrichtung bei unterschiedlichen Stellungen des Entnahmemittels.
Figur 4 zeigt eine Aufsicht auf ein zweites Ausführungsbeispiel gemäß der vorliegenden Erfindung.
Figur 5 zeigt eine Ansicht der Aufnahmeeinheit aus der X-Richtung der in Figur 4 gezeigten Ausführungsform ohne Rauchstock und ohne Führungselement.
Figur 6 zeigt eine Seitenansicht des Führungselements und des Verteilerstücks sowie der Rauchstöcke aus der X-Richtung, der in Figur 4 gezeigten Ausführungsform.
Figur 7 zeigt eine Ansicht aus der Y-Richtung, der in Figur 4 gezeigten Ausführungsform der vorliegenden Erfindung.
Figur 8 zeigt eine Aufsicht auf ein drittes Ausführungsbeispiel gemäß der vorliegenden Erfindung.
Figur 9 ist eine Ansicht aus der Y-Richtung, der in Figur 8 gezeigten Ausführungsform.
Figur 10 ist eine Aufsicht auf ein viertes Ausführungsbeispiel gemäß der vorliegenden Erfindung.

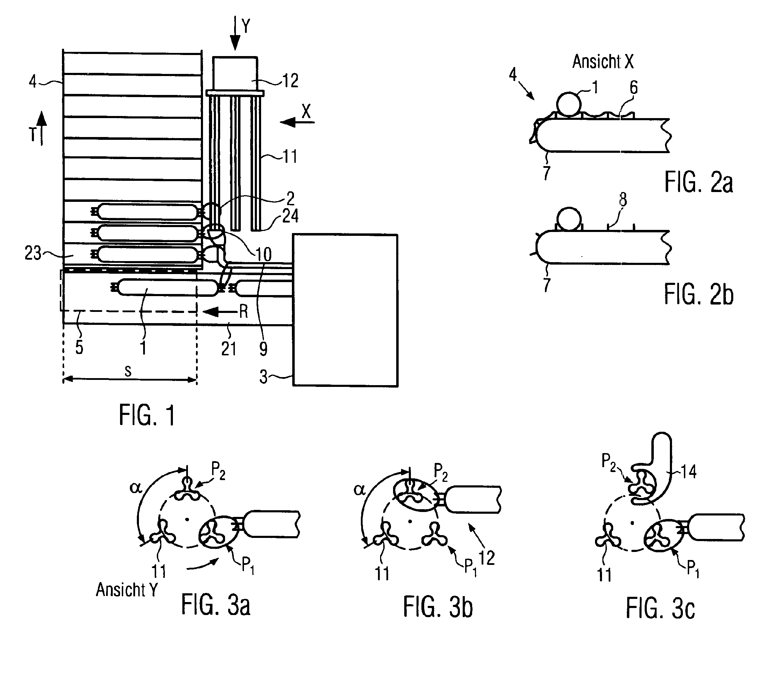

Figur 1 zeigt ein erstes Ausführungsbeispiel gemäß der vorliegenden Erfindung. Die Vorrichtung gemäß der vorliegenden Erfindung dient zum Aufnehmen von Wurstportionen 1 an entsprechenden Aufhängeschlaufen 2 auf ein Entnahmemittel, insbesondere einen Stock bzw. Rauchstock 11. Unter Wurstportionen versteht man beispielsweise Einzelwürste, die an einer Schlaufe 2 aufgehängt sind, wie beispielsweise in den Figuren dargestellt, oder aber auch eine Wurstkette mit mehreren Würsten, die an einer Schlaufe 2 hängen.

Bei der Wurstproduktion wird in bekannter Weise Wurstbrät in eine Wursthülle geschoben. Die gefüllte Wursthülle wird dabei in Einzelportionen unterteilt, z. B durch Abdrehen, so dass sich ein entsprechender sog. Wurstzopf zwischen den Einzelwürsten ausbildet. Die Würste können dann zu einem Clipmodul, d.h. eine Verschlusseinheit 3, transportiert werden, wo ein Clip, insbesondere ein Metallclip gesetzt wird, und eine Schlaufe angebracht wird. Es ist auch möglich, dass der Wurststrang erst in der Verschlusseinheit, beispielsweise mit Scherenverdrängem unterteilt wird, wobei dann der Clip gesetzt und die Schlaufe angebracht wird.

Die vorliegende Erfindung umfasst eine solche Verschlusseinheit 3, bzw. ein solches Clipmodul, die zwischen zwei Einzelwürsten zwei Verschlussklammern, sog. Clips setzt, um die Würste ausreichend zu verschließen. Beim Setzen der Verschlussklammem kann in bekannter Weise eine Schlaufe 2 in eine Klammer mit eingeclipt werden. Die Schlaufe 2 ist beispielsweise aus Kunstgarn gefertigt. Die Schlaufe 2 wird nur an einer Seite der Wurst angebracht. Die Wurstportionen können dann mit einer Trenneinheit zwischen den Clips auseinandergeschnitten werden. Wenn Wurstportionen mit mehreren Einzelwürsten hergestellt werden sollen, so wird nur für jede n-te Wurstportion eine Schlaufe eingeclipt und nur an jeder n-ten Wurst die Wurstkette durchtrennt.

Die erfindungsgemäße Vorrichtung umfasst weiter ein Übergabetransportmittel 21 auf dem die Wurstportionen 1 liegend in Pfeilrichtung R von der Verschlusseinheit 3 wegtransportiert werden. Das Übergabetransportmittel kann beispielsweise ein umlaufendes Förderband sein oder aber auch eine Rutsche, an der die Einzelportionen in Pfeilrichtung R zu einem Übergabemittel 5 rutschen. Zum Transport der Wurstportion 1 wird die Schlaufe 2 von dem Führungselement 9 aufgenommen und z. B. formschlüssig geführt. Das Führungselement 9 kann dabei an seinem, der Verschlusseinheit 3 zugewandten Ende als Aufnahmedorn ausgebildet sein, um die Schlaufen 2 gut auffädeln zu können. Die Länge S des Übergabemittels 5 entspricht mindestens der maximalen Portionslänge einer Einzelwurst oder der Kettenlänge, damit ein kontinuierlicher Prozess möglich ist. Das Übergabemittel 5 kann beispielsweise als Schieber ausgebildet sein. Das Übergabemittel 5 übergibt eine Wurstportion quer zur Richtung R in eine flexible Aufnahmeeinheit 4. Die Aufnahmeeinheit 4 nimmt die Wurstportionen 1 im wesentlichen quer zu einer Transportrichtung T liegend auf und transportiert diese in Transportrichtung T. Dabei weist die Aufnahmeeinheit eine Vielzahl von gleichmäßig beabstandeten Aufnahmeplätzen 23 für die Wurstportionen 1 auf. Die Länge der Aufnahmeeinheit 4 ist so gewählt, dass Portionen 1 auch gepuffert werden können. Das bedeutet, dass in einer Horizontalebene, beispielsweise auf der Oberseite der Aufnahmeeinheit 4 mehr Aufnahmeplätze 23 vorhanden sind, als auf dem Rauchstock 11 aufgenommen werden. Vorzugsweise ist dabei zwischen Rauchstockende 24 und dem vorderen Ende der Aufnahmeeinheit 4 ein bestimmter Abstand vorgesehen, so dass beim Rauchstockwechsel der Prozess nicht unterbrochen werden muss.

Wie aus Figuren 2a und b hervorgeht, kann die Aufnahmeeinheit 4 als umlaufendes Transportmittel 7, beispielsweise aus einem umlaufenden Transportband, -kette, etc. gebildet sein. In Figur 2a sind dabei mehrere Schalen 6 vorgesehen, die abhängig von dem Produktkaliber und der Produktform einstellbar sind und somit die Wurstportionen lagefixiert mit definierten Abständen aufnehmen. Die Schalen können aus vorgefertigten Elementen gebildet sein. Alternativ dazu können die Schalen 6 auch durch sich senkrecht zu dem umlaufenden Antriebselement 7 erstreckenden Stegen 8 gebildet sein, wobei die Wurstportionen dann jeweils zwischen zwei Stegen 8 zu liegen kommen. Durch Ausbilden dieser Schalen werden die Wurstportionen exakt positioniert und weisen einen exakten Abstand zueinander auf.

Das Führungselement 9 macht hier einen Knick und erstreckt sich also zumindest in seinem Endbereich im wesentlichen in Transportrichtung T, hier seitlich von der Aufnahmeeinheit 4. Am Ende 10 des Führungselementes 9 weist das Führungselement einen erweiterten Querschnitt auf, so dass die Schlaufe 2 gespreizt wird. Das Ende 10 ist zugleich die Schnittstelle zum Entnahmemittel, d. h. zum Rauchstock 11. Durch das Aufspreizen kann die Schlaufe 2 in besonders einfacher Art und Weise über den Rauchstock 11 gebracht werden. Die Bestückung und Entnahme mit dem Entnahmemittel 11, d. h. dem Rauchstock 11 kann auf verschiedene Arten erfolgen wie in den unterschiedlichen Ausführungsbeispielen näher erläutert wird.

Bei dem im Figur 1 gezeigten Ausführungsbeispiel weist die Vorrichtung eine Halteeinrichtung 12 auf, die das längliche Entnahmemittel 11 an einem Ende hält. Das andere Ende ist in linearer Verlängerung zum Führungselement 9 angeordnet. Das Ende 10 des Führungselementes 9 ist so gestaltet, dass das Öffnen der Schlaufe 2 in Kombination mit dem Weitertransport der Portion 1 gewährleistet ist. Die Haltevorrichtung 12 weist mehrere, hier drei, Halterungen für die Rauchstöcke auf, die gleichmäßig voneinander beabstandet auf einem Kreis angeordnet sind. Die Haltevorrichtung 12 ist drehbar gelagert, so dass die Rauchstöcke um einen bestimmten Winkel α in unterschiedliche Positionen verdreht werden können. Bei dem in Figur 3a gezeigten Ausführungsbeispiel sind in der Haltevorrichtung 12 drei Rauchstöcke angeordnet. Durch Drehen der Haltevorrichtung um einen bestimmten Winkelbetrag, z. B. 120° kann der Rauchstock aus einer ersten Stellung P1 in die Stellung des benachbarten Rauchstocks P2 gebracht werden, wie insbesondere aus Fig. 3a,b,c hervorgeht. Mit Hilfe der Halteeinrichtung 12 kann also ein erster Rauchstock in eine Beladeposition bzw. Aufnahmeposition P1 gebracht werden und nachdem dieser mit einer vorbestimmten Anzahl an Wurstportionen beladen ist, durch Drehen in eine Entnahmeposition P2 gebracht werden, wobei der nachfolgende Rauchstock in die Aufnahmeposition P1 gebracht wird. Somit ist ein kontinuierlicher Prozess möglich.

Nachfolgend wird das erfindungsgemäße Verfahren gemäß dem ersten Ausführungsbeispiel näher erläutert. Zunächst wird zwischen zwei Einzelportionen für eine entsprechende Wurstportion 1 eine Aufhängeschlaufe 2 positioniert und in der Verschlusseinheit 3 mit einer Verschlussklammer mit eingeclipt. Die Schlaufe 2 wird dann auf das Führungselement 9 aufgezogen. Die Wurstportion 1 wird dann über das Übergabetransportmittel 21 in Richtung R vorzugsweise liegend transportiert. Nach einer bestimmten Strecke erreicht die Wurstportion das Übergabemittel 5, dessen Länge S mindestens der maximalen Portionslänge, bzw. Kettenlänge entspricht. Wenn sich die Wurstportion 1 in einer bestimmten Position im Bereich des Übergabemittels 5 befindet, wird die Portion 1 quer, d. h. in Transportrichtung T in die flexible Aufnahmeeinheit 4, d. h. in eine Schale 6 der Aufnahmeeinheit 4 übergeben. Dies kann beispielsweise durch Schieben der Portion erfolgen. Während des Transports der Wurstportion durch das Übergabetransportmittel 21 sowie im vorderen seitlichen (oder auch oberen ) Bereich der Aufnahmeeinheit 4 wird die Schlaufe 2 durch das Führungselement 9 geführt. Durch die Aufnahme der Wurstportion 1 in der Schale 6, sowie durch die Führung der Schlaufe 2 durch das Führungselement 9, kann die Schlaufe 2 lagegenau ausgerichtet werden. Ist nun eine erste Wurstportion1 in einer Schale der Aufnahmeeinheit 4 positioniert, fährt die nächste Portion 1 auf die Übergabeeinheit 5 und wird in die nachfolgende Schale 6 quer zur Richtung R übergeben. Wenn die Schlaufen 2 das Ende 10 des Führungselementes 9 passieren, werden die Schlaufen 2 aufgespreizt, so dass die Schlaufen leicht über den Rauchstock 11 transportiert werden können.

Ist eine bestimmte Anzahl an Einzelportionen auf den Rauchstock aufgebracht, dreht sich die Haltevorrichtung 12 um einen bestimmten Winkel α, hier 120°, und bringt somit das nächste leere Entnahmemittel 11, hier den nächsten leeren Rauchstock in eine Aufnahmeposition P1. Gleichzeitig bewegt sich das befüllte Entnahmemittel, d. h. der befüllte Rauchstock 11 nach oben in eine Entnahmeposition P2. Wie aus Figur 3c ersichtlich ist, kann in dieser Entnahmeposition beispielsweise ein Greifer 14 eines Roboterarms das Entnahmemittel 11, d. h. den Rauchstock greifen und aus der Vorrichtung 12 ausklinken. Mittels des Greifers 14 wird das Entnahmemittel 11 linear weiter transportiert. Dadurch hat der Bediener entsprechend Zeit, diesen dann zu entnehmen. Der Greifer 14 bietet auch die Möglichkeit eines automatischen Weitertransports, beispielsweise zur Ablage in einen Rauchwagen. Vorteilhafter Weise kann dann, wie aus Figur 3c hervorgeht, bereits während der Entnahme des Rauchstocks in der Entnahmeposition P2 der nächste Rauchstock in der Aufnahmeposition P1 mit Portionen bestückt werden, indem die Einzelportionen mit der Aufnahmeeinheit 4 in Transportrichtung T transportiert werden. Somit ist ein kontinuierlicher Prozess möglich. Durch die genau definierte Lage der Einzelportionen auf der Aufnahmeeinheit sowie das Führen der Schlaufen durch das Führungselement können die Schlaufen 2 ideal ausgerichtet werden. Es ergibt sich ein genau definierter Produktabstand, wobei dynamische Kräfte in Folge eines Falls verhindert werden können.

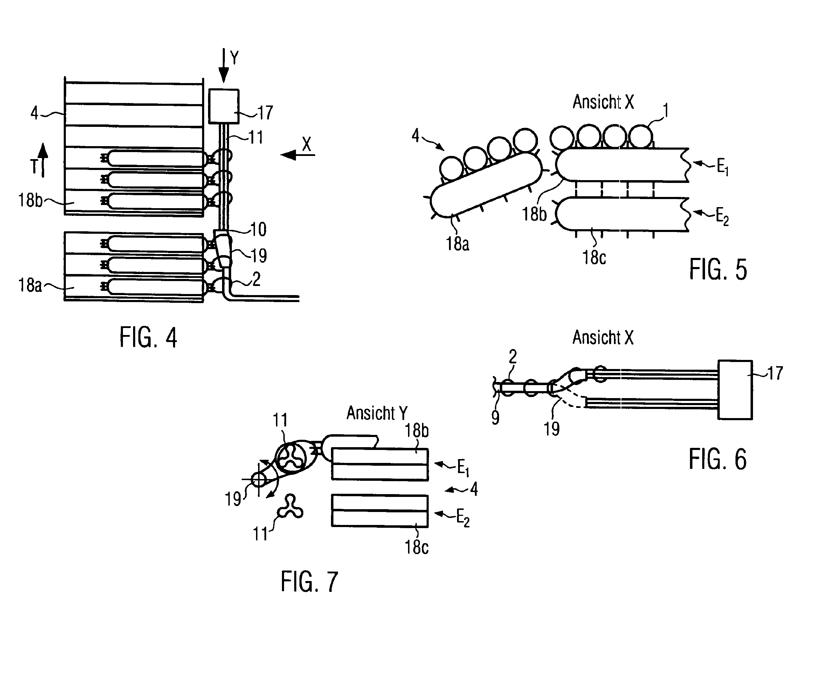

Figur 4 zeigt ein zweites Ausführungsbeispiel gemäß der vorliegenden Erfindung. Figur 4 entspricht dabei im wesentlichen dem in Figur 1 gezeigten Ausführungsbeispiel, wobei hier jedoch die Aufnahmeeinheit 4 die Portionen 1 in zwei Ebenen E1, E2 aufnehmen kann. Hier umfasst die Aufnahmeeinheit 4 eine Zuführeinheit 18a. Die Zuführeinheit 18a ist hier auch als umlaufendes Transportmittel mit entsprechenden Schalen zur Aufnahme der Wurstportionen realisiert. An die Zuführeinheit 18a schließen sich zwei übereinander liegende umlaufende Transportmittel 18b, c an, die jeweils aus einem umlaufenden Transportmittel, wie auch im Zusammenhang mit den Figuren 1 und 2 näher erläutert, gebildet sind. Die Zuführeinheit 18a ist schwenkbar angeordnet und kann über einen entsprechenden Antrieb derart verschwenkt werden, dass Portionen von der Zuführeinheit 18a entweder dem oberen Transportmittel 18b oder dem unteren Transportmittel 18c zugeführt werden können. Die Ebenen E1 und E2 sind im wesentlichen parallel übereinander angeordnet. Weiter umfasst das Führungselement 9 ein Verteilerstück 19, das sich seitlich neben der Zuführeinheit 18a erstreckt. Entsprechend der Stellung der Zuführeinheit 18a kann auch die Stellung der Schlaufe 2 mittels des Verteilerstückes 19 eingestellt werden. So wird auch die Schlaufe 2 entweder in eine entsprechende obere Ebene oder untere Ebene geführt. Wie insbesondere aus Figuren 6 und 7 hervorgeht, ist dazu das Verteilerstück zwischen einer oberen und unteren Position verschwenkbar. Eine Haltevorrichtung 17 ist derart ausgebildet, dass sie zwei übereinander angeordnete Halterungen für zwei übereinander angeordnete Entnahmemittel 11 aufweist. So können die Entnahmemittel 11 entweder dem oberen Transportmittel 18b oder dem unteren Transportmittel 18c zugeordnet werden.

Das zweite Ausführungsbeispiel arbeitet wie folgt: wie im Zusammenhang mit dem ersten Ausführungsbeispiel beschrieben, werden die Wurstportionen mit den Schlaufen der Aufnahmeeinheit 4 zugeführt. Befindet sich ein Entnahmemittel in der oberen Position, die einer ersten Ebene E1 entspricht, so wird die Zuführeinheit 18a nach oben verschwenkt (siehe Figur 5) und das Verteilerstück 19 des Führungselementes 9 wird ebenfalls in eine obere Position, die einer oberen Ebene E1 entspricht, verschwenkt. Somit können die Einzelportionen zu dem oberen Transportmittel 18b gefördert und an dieses übergeben werden. Die Zuführeinheit 18a und die Transportmittel 18b, c sind derart angeordnet, dass die Wurstportion von einer Schale der Zuführeinheit 18a in eine Schale der Transporteinheit übergeben wird. Dadurch, dass auch das Verteilerstück in der oberen Position angeordnet ist, werden auch die Schlaufen 2 in eine der oberen Ebene E1 entsprechenden Position überführt (siehe Figur 6 und 7). Auch hier ist das Ende des Entnahmemittels in linearer Verlängerung zum Führungselement bzw. Verteilerstück angeordnet. Durch Bewegung der Einzelportionen in Transportrichtung T werden die Schlaufen 2 über den Rauchstock 11 gezogen. Wird eine bestimmte Anzahl über das Entnahmemittel 11 geführt, wird die Zuführung auf die untere Ebene E2 umgestellt. Dazu wird sowohl die Zuführeinheit 18a als auch das Verteilerstück in eine untere Stellung verschwenkt. Nun befindet sich der untere Rauchstock in linearer Verlängerung zum Verteilerstück 19 (siehe Figur 6). Während der untere Rauchstock bereits wieder beladen wird, kann der obere Rauchstock entnommen werden (manuell oder durch einen Greifer, z.B. mittels Roboterarm). Hat der Bediener bzw. der Greifer die obere Charge entnommen, wird wieder ein leeres Entnahmemittel 11 in die Halteeinrichtung 17 gesteckt und der Vorgang wiederholt sich. Diese Ausführungsform ermöglicht ebenfalls einen kontinuierlichen Prozess mit hohem Durchsatz.

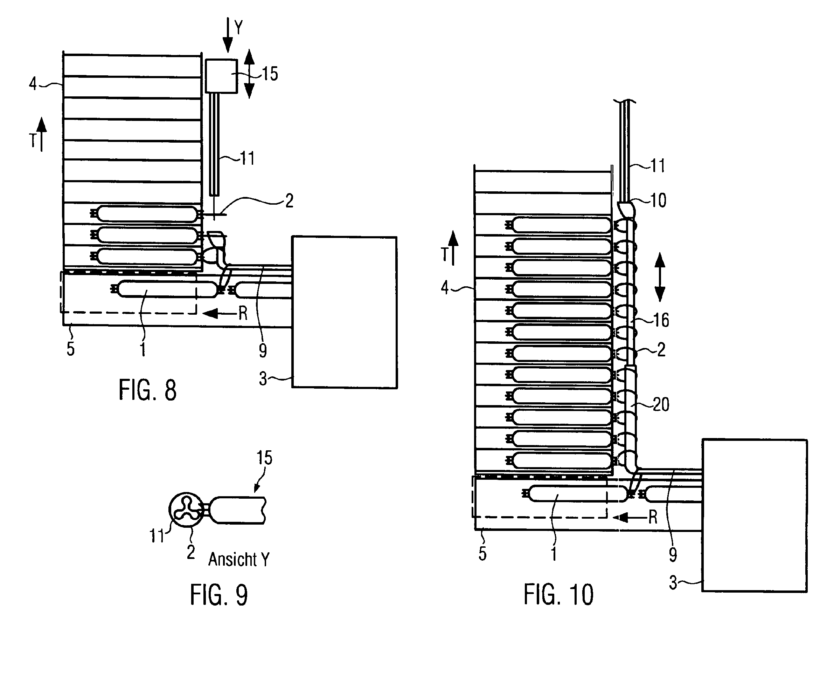

Figur 8 zeigt ein drittes Ausführungsbeispiel gemäß der vorliegenden Erfindung. Das dritte Ausführungsbeispiel entspricht dabei im wesentlichen dem in Zusammenhang mit Figur 1 gezeigten Ausführungsbeispiel, wobei sich lediglich die Bestückung und Entnahme mit dem Entnahmemittel 11 unterscheidet. Das in Figur 8 gezeigte Ausführungsbeispiel weist eine Halteeinrichtung 15 auf, die linear beweglich ist und entgegen der Transportrichtung T auf das Ende 10 des Führungselementes 9 bewegt werden kann. Dabei kann das Entnahmemittel, d. h. der Rauchstock 11 entweder über einen entsprechenden Antrieb in Richtung zum Ende 10 des Führungselements 9 bewegt werden und in die Schlaufen 2 einfädeln oder aber manuell , geführt durch die Halteeinrichtung 15, in die Schlaufen 2 geschoben werden. Dadurch, dass die Schlaufen 2 durch das Führungselement 9 exakt vertikal ausgerichtet und geöffnet abgegeben werden, kann der Rauchstock 11 einfach eingeführt werden.

Figur 10 zeigt ein viertes Ausführungsbeispiel gemäß der vorliegenden Erfindung. Figur 10 entspricht dabei im wesentlichen dem in Figur 1 gezeigten Ausführungsbeispiel, wobei das Führungselement 9 weiter ein Führungsrohr 20 umfasst. Das Führungselement 9 knickt auch hier um ca. 90° ab und umfasst das Führungsrohr 20, das sich im wesentlichen parallel zur Aufnahmeeinheit 4 erstreckt. Die Führungsstange 16 ist in dem Führungsrohr 20 radial lagefixiert angeordnet, jedoch horizontal beweglich und kann in das Führungsrohr 20 hineingeschoben werden, so dass die beiden Elemente in Kombination eine Teleskopstange bilden. Das Ende 10 der Führungsstange 16 ist gleich gestaltet wie bei den anderen Ausführungen und erweitert sich zum Aufspreizen der Schlaufen 2. Zusätzlich weist die Führungsstange 16 eine Aussparung zum Einlegen des Entnahmemittels 11, d. h. des Rauchstocks, auf. Diese Aussparung ist so gestaltet, dass das Entnahmemittel 11, d. h. der Rauchstock, nach oben entnommen werden kann. Der Bediener kann somit das Entnahmemittel 11 am Ende 10 positionieren und gegen eine Feder die Führungsstange 16 in das Führungselement 9 bis zu einem Anschlag hineinschieben. Dabei werden die Schlaufen 2 übergeben, da das Entnahmemittel in die Schlaufen, die über der Führungsstange 16 angeordnet waren, einfädelt. Der Rauchstock bzw. das Entnahmemittel nimmt dann eine entsprechende Anzahl an Schlaufen auf. Wenn das Entnahmemittel, d. h. der Rauchstock 11 bestückt ist, kann dieser nach oben mit den Portionen 1 abgenommen werden. Die Führungsstange 16 fährt dann automatisch mit einer bestimmten Geschwindigkeit wieder in die Ausgangslage zurück. Die Führungsstange 16 kann dann erneut mit Schlaufen überzogen werden, indem die Aufnahmeeinrichtung 4 die Einzelportionen in Transportrichtung T bewegt. Somit ist ein kontinuierlicher Prozess gewährleistet. Alternativ kann die Zuführung des Entnahmemittels 11, d. h. des Rauchstocks, auch unterstützt mit der Aufnahme 15 oder automatisch mit z. B. einem Roboter erfolgen.

Die Schlaufen stehen beim Beladen des Entnahmemittels seitlich über die Aufnahmeeinheit 4 oder nach oben, so dass eine Führung durch das Führungselement und ein Aufbringen auf ein Entnahmemittel möglich sind.

Dadurch, dass die Einzelportionen in der Aufnahmeeinheit einen konstanten, exakt definierten, an das Wurstkaliber angepassten Abstand zueinander aufweisen und auch die Schlaufen 2 durch das Führungselement 9 ausgerichtet werden, haben die an dem Entnahmemittel hängenden Portionen einen exakten Abstand zueinander.

## Patentansprüche

1. Vorrichtung zum Aufnehmen von an Schlaufen (2) aufgehängten Wurstportionen (1) mit
einer Verschlusseinheit (3) zum Verschließen von Würsten und zum Anbringen von Schlaufen (2) an die Wurstportionen (1)
**gekennzeichnet durch**
eine Aufnahmeeinheit (4), die nach der Verschlusseinheit (3) angeordnet ist und die so ausgebildet ist, dass die Wurstportionen im wesentlichen quer zu einer Transportrichtung (T) liegend aufgenommen werden und in Transportrichtung (T) transportiert werden, derart, dass die Schlaufen (2) über ein Entnahmemittel (11) bringbar sind, während die Portionen (1) auf der Aufnahmeeinheit (4) aufliegen.

2. Vorrichtung nach Anspruch 1,
**dadurch gekennzeichnet, dass**
die Vorrichtung ein Führungselement (9) umfasst, das die Schlaufen (2) aufnimmt, derart, dass die Schlaufen (2) an dem Führungselement (9) von der Verschlusseinheit (3) zu der Aufnahmeeinheit (4) geführt werden.

3. Vorrichtung nach Anspruch 2,
**dadurch gekennzeichnet, dass**
das Führungselement (9) sich zumindest in dem von der Verschlusseinheit abgewandten Endbereich im wesentlichen in Transportrichtung (T) erstreckt.

4. Vorrichtung nach mindestens einem der Ansprüche 2 oder 3,
**dadurch gekennzeichnet, dass**
das Führungselement (9) am Ende (10) einen vergrößerten Querschnitt aufweist, derart, dass die Schlaufen (2) gespreizt werden.

5. Vorrichtung nach mindestens einem der Ansprüche 1 bis 4,
**dadurch gekennzeichnet, dass**
die Aufnahmeeinheit (4) ein umlaufendes Transportmittel (7) umfasst.

6. Vorrichtung nach mindestens einem der Ansprüche 1 bis 5,
**dadurch gekennzeichnet, dass**
die Aufnahmeeinheit (4) umlaufende Schalen (6) zur Aufnahme der einzelnen Wurstportionen (1) aufweist.

7. Vorrichtung nach mindestens einem der Ansprüche 2 bis 6,
**dadurch gekennzeichnet, dass**
sich das Entnahmemittel (11) in linearer Verlängerung zum Führungselement (9) erstreckt.

8. Vorrichtung nach mindestens einem der Ansprüche 1 bis 7,
**dadurch gekennzeichnet, dass**
die Anzahl an Aufnahmeplätzen für Wurstportionen (1) auf der Oberseite der Aufnahmeeinheit (4) größer ist, als die auf das Entnahmemittel (11) aufzunehmende Anzahl an Wurstportionen (1).

9. Vorrichtung nach mindestens einem der Ansprüche 1 bis 8,
**dadurch gekennzeichnet, dass**
die Vorrichtung ein Übergabetransportmittel (21) umfasst, das die Wurstportionen (1) in einer Richtung quer zur Transportrichtung (T) der Aufnahmeeinheit (4) zu einer Übergabeeinrichtung (5) fördert, die die Portionen (1) quer in die Aufnahmeeinheit übergibt.

10. Vorrichtung nach mindestens einem der Ansprüche 1 bis 9,
**dadurch gekennzeichnet, dass**
die Vorrichtung weiter eine Halteeinrichtung (12, 15, 17) umfasst, die mindestens ein Entnahmemittel (11) an einem Ende parallel zur Aufnahmeeinheit (4) hält.

11. Vorrichtung nach Anspruch 10,
**dadurch gekennzeichnet, dass**
die Halteeinrichtung (12) mehrere Entnahmemittel (11) hält und drehbar gelagert ist.

12. Vorrichtung nach mindestens einem der Ansprüche 1 bis 11,
**dadurch gekennzeichnet, dass**
die Aufnahmeeinheit (4) derart ausgebildet ist, dass sie Portionen in zwei übereinander angeordneten Ebenen (E1, E2) aufnimmt.

13. Vorrichtung nach mindestens Anspruch 12,
**dadurch gekennzeichnet, dass**
die Aufnahmeeinheit (4) eine am, in Transportrichtung gesehen, vorderen Ende angeordnete Zuführeinheit (18a) umfasst und zwei sich daran anschließende, übereinander liegende, umlaufende Transportmittel (18b, c), wobei die Zuführeinheit (18a) schwenkbar angeordnet ist, so dass Portionen von der Zuführeinheit (18a) entweder dem oberen Transportmittel (18b) oder dem unteren Transportmittel (18c) zuführbar sind.

14. Vorrichtung nach Anspruch 12 oder 13,
**dadurch gekennzeichnet, dass**
die Halteeinrichtung (17) derart ausgebildet ist, dass sie zwei übereinander angeordnete Halterungen für zwei übereinander angeordnete Entnahmemittel (11) aufweist, so dass die Entnahmemittel (11) entweder dem oberen Transportmittel (18b) oder dem unteren Transportmittel (18c) zugeordnet sind.

15. Vorrichtung nach mindestens einem der Ansprüche 12 bis 14,
**dadurch gekennzeichnet, dass**
zumindest ein Endbereich des Führungselementes als Verteilerstück (19) ausgebildet ist, das zwischen erster und zweiter Ebene (E1, E2) verschwenkbar ist.

16. Vorrichtung nach mindestens einem der vorhergehenden Ansprüche,
**dadurch gekennzeichnet, dass**
die Vorrichtung eine linear bewegliche Halteeinrichtung (15) für das Entnahmemittel (11) umfasst.

17. Vorrichtung nach mindestens einem der Ansprüche1 bis 16 ,
**dadurch gekennzeichnet, dass**
das Führungselement (9) ein Führungsrohr (20) umfasst, in dem eine Führungsstange (16) horizontal beweglich angeordnet ist, und dass das von dem Führungsrohr (20) abgewandte Ende der Führungsstange eine Aufnahme für das Entnahmemittel (11) aufweist.

18. Verfahren zum Aufnehmen von an Schlaufen (2) aufgehängten Wurstportionen (1), wobei an den Wurstportionen (1) eine Schlaufe angebracht wird,
**dadurch gekennzeichnet, dass**
die Wurstportionen (1) in einer Aufnahmeeinheit (4) quer zu einer Transportrichtung (T) liegend in Transportrichtung (T) transportiert werden und auf der Aufnahmeeinheit (4) liegend über ein Entnahmemittel (11) gebracht werden.

19. Verfahren nach Anspruch 18,
**dadurch gekennzeichnet, dass**
die Schlaufen (2) gespreizt werden bevor sie über Entnahmemittel (11) gebracht werden.

20. Verfahren nach Ansprüchen 18 oder 19,
**dadurch gekennzeichnet, dass**
eine drehbar gelagerte Halteeinrichtung (12) mehrere Entnahmemittel (11) umfasst, wobei ein erstes Entnahmemittel (11) in eine Aufnahmeposition (P1) gebracht wird, die Schlaufen (2) während des Transports auf der Aufnahmeeinheit (4) über das erste Entnahmemittel (11) transportiert werden,
wenn die Schlaufen (2) einer vorbestimmten Anzahl von Wurstportionen über das Entnahmemittel (11) gezogen worden sind, sich die Halteeinrichtung (12) bewegt und ein weiteres Entnahmemittel (11) in die Aufnahmeposition (P1) bringt.

21. Verfahren nach mindestens einem der Ansprüche 19 bis 20,
**dadurch gekennzeichnet, dass**
die Aufnahmeeinheit (4) die Portionen, die auf ein erstes Entnahmemittel (11) aufgebracht werden, in einer ersten horizontalen Ebene (E1) fördert, und die Portionen, die auf ein nachfolgendes zweites Entnahmemittel (11) aufgebracht werden, in einer zweiten horizontalen Ebene (E2) fördert.

22. Verfahren nach einem der Ansprüche 18 bis 21,
**dadurch gekennzeichnet, dass**
das Entnahmemittel (11) manuell oder maschinell in die Schlaufen (2) durch eine entgegengesetzt zur Transportrichtung (T) der Aufnahmeeinheit (4) gerichtete lineare Bewegung eingeführt wird.

23. Verfahren nach mindestens einem der Ansprüche 18 bis 21,
**dadurch gekennzeichnet, dass**
die Schlaufen (2) bei ihrem Transport in der Aufnahmeeinheit (4) über das Entnahmemittel (11) gezogen werden.

24. Verfahren nach mindestens einem der Ansprüche 18 bis 23,
**dadurch gekennzeichnet, dass**
die Schlaufen (2), nachdem sie an die Wurstportionen (1) angebracht wurden, von einem Führungselement (9) aufgenommen werden, das die Schlaufen (2) bei ihrem Transport zur Aufnahmeeinheit (4) und weiter bis zur Übergabe auf das Entnahmemittel (11) führt.

25. Verfahren nach mindestens einem der Ansprüche 18-24,
**dadurch gekennzeichnet, dass** die Wurstportionen lagefixiert mit definiertem Abstand zueinander in der Aufnahmeeinheit (4) aufgenommen werden.
